# EUROPÄISCHE PATENTANMELDUNG

(11) **EP 1 081 212 A2**
(43) Veröffentlichungstag der Anmeldung: **07.03.2001**
(21) Anmeldenummer: 00117902.7
(22) Anmeldetag: 19.08.2000
(51) Int. Cl.: C11B 9/02, A23L 1/235, A23L 1/226

(54) **Verfahren zur adsorptiven Abtrennung von Furaneol**

(30) Priorität: 03.09.1999 DE 19941919
(71) Anmelder: Degussa-Hüls Aktiengesellschaft, 60287 Frankfurt am Main (DE)
(72) Erfinder: Treffenfeldt, Wiltrud, Prof., 63179 Obertshausen (DE); Karau, Andreas, Dr., 67434 Neustadt (DE); Scheper, Thomas, Prof. Dr., 30559 Hannover (DE); Pundsack, Edgar, Dr., 60528 Frankfurt (DE)

(57) **Zusammenfassung**

Die Erfindung betrifft ein Verfahren zur adsorptiven Abtrennung von Furaneol® aus wäßrigen und/oder organische Lösungsmittel enthaltenden Lösungen und seine Isolierung durch Adsorption mit Zeolith, wobei man auch eine durch chemische Synthese gewonnene Lösung einsetzt.

## Beschreibung

Die Erfindung betrifft ein Verfahren zur adsorptiven Abtrennung von Furaneol® aus wäßrigen und/oder organische Lösungsmittel enthaltenden Lösungen und seine Isolierung.

Furaneol (4-Hydroxy-2.5-dimethyl-3(2H)-furan-3-one) ist ein wichtiger Aromastoff, der in geringen Konzentrationen einen typischen Erdbeergeruch und in höheren Konzentrationen einen kräftigen Karamelgeruch repräsentiert.

Es sind verschiedene Wege zur Herstellung dieser Verbindung bekannt.

Ein frühes Verfahren geht von 2,5-Dimethoxy-2,5-dimethyl-dihydrofuran aus und liefert Ausbeuten um 50 %. Die Reaktion bildet die Grundlage für eine bis heute industriell genutzte Synthese. Im Mittelpunkt steht dabei eine Gewinnung ausgehend von 3-Hexin-2,5-diol durch Ozonolyse nach Re et al. [Re et al., Helv.Chim. Acta, 1973, 56(6) 1882-94]:

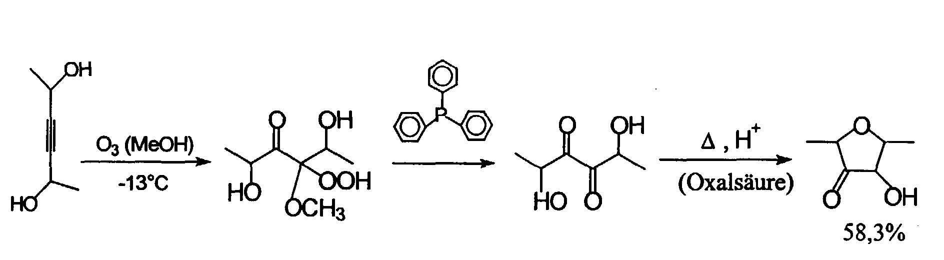

In der EP-A 0 398 417 wird das die Synthese von 5-Methyl- und 2,5-Dimethyl-4-hydroxy-2,3-dihydrofuran-3-on aus Pentosen oder 6-Desoxyhexosen beschrieben. Dabei wird in Gegenwart von Aminosäuren, vornehmlich Lysin, Prolin und Hydroxyprolin, erhitzt und das Produkt direkt aus dem Reaktionsgemisch in Gegenwart von hochsiedenen organischen Lösungsmittel, wie Propylenglycol und Glycerol unter reduziertem Druck abdestilliert.

Eine klassische Methode zur Darstellung von Furaneol® aus Rhamnose in Gegenwart von Piperidinacetat wurde von *Peer* [Peer, Recl. Trav. Chim. Pays Bas (1986) 1011-1016] vorgestellt. Die Ausbeuten bei dieser Reaktion sind hoch (60%). Jedoch erhält man zunächst ein Öl, das in einem weiteren Schritt über einen Ionenaustauscher von restlichem Enamin und Essigsäure befreit werden muß, um schließlich reines Furaneol® zu erhalten. Ein gravierender Nachteil ist jedoch die Toxizität des Piperidins, so daß das gemäß dieser Methode hergestellte Furaneol® nicht in Lebensmitteln verwendet werden darf.

Eine weitere Methode zur Darstellung von Furaneol stellt die Synthese aus Rhamnose mit Hilfe der Maillard-Reaktion unter Anwesenheit von primären oder sekundären Aminogruppen dar. Als Aminogruppenträger kann z.B. Asparaginsäure eingesetzt werden. Die Verwendung von Asparaginsäure hat zusätzlich den Vorteil, daß das auf diese Weise hergestellte Furaneol als natürlicher Aromastoff zählt und damit den 5 - 10 fachen Marktwert gegenüber den 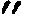 chemosynthetisierten" Produkten besitzt.

Durch seine Hitze- und Oxidationsempfindlichkeit und durch das breite Spektrum an störenden Nebenprodukten ist die Aufreinigung des gewünschten Produktes nur mit erheblichen Aufwand möglich. Die Isolierung gestaltet sich oft problematisch und ist sehr oft mit hohen Verlusten verbunden. Bei der Maillard Reaktion mit Asparaginsäure entstehen z.B. braune Pigmente, sogenannte *Melanoidine*. Es handelt sich hierbei um Kondensationsprodukte, die Stickstoff in variierenden Mengen enthalten und unterschiedliche Molekulargewichte und Polarität besitzen. Sie sind überall dort erwünscht, wo eine Eigenfärbung des Produktes (z.B. braune Brotkrume) erwartet wird. Sie sind nicht erwünscht bei Lebensmitteln, die eine schwache oder andere Eigenfarbe besitzen (z.B. Kondensmilch) [Belitz und Grosch, 1992, Lehrbuch der Lebensmittelchemie, Springer Verlag, 4. Auflage].

Die Aufarbeitung des Furaneols gestaltet sich daher als entsprechend schwierig. Technisch kommen entweder extraktive Verfahren oder adsorptive Verfahren in Frage. Bei adsorptiven Verfahren hat sich gezeigt, daß ganz besonders die Melanoidine aufgrund ihrer ähnlichen Polarität vom gewünschten Produkt schwer abzutrennen sind. Eine selektive Adsorption von ausschließlich Furaneol bzw. den Melanoidinen an herkömmlichen Adsorbentien wie Aktivkohle oder anderen makroporösen Harzen ist nur unter extremen Bedingungen (z.B. pH = 0) und unter Inkaufnahme schlechter Ausbeuten möglich, wie eigene Versuche zeigten. Furaneol ließ sich außerdem nicht mit herkömmlichen Lösungsmitteln von der Aktivkohle desorbieren.

Aufgabe der Erfindung ist es, ein Verfahren bereitzustellen, das geeignet ist, Furaneol aus wäßrigen und/oder organischen Lösungsmittel enthaltenden Lösungen adsorptiv selektiv abzutrennen und von dem Adsorbens zu desorbieren.

Gegenstand der Erfindung ist ein Verfahren zur adsorptiven Abtrennung von Furaneol aus wäßrigen und/oder organische Lösungsmittel enthaltenden Lösungen, das dadurch gekennzeichnet ist, daß man Furaneol enthaltende Lösungen mit einem sauren Zeolith, der bevorzugt ein Modul von 14 bis 1000, insbesondere von 100 bis 1000 aufweist, in Kontakt bringt, nach erfolgter Adsorption den Zeolith abtrennt, anschließend insbesondere mit Wasser wäscht, das Furaneol mit einem Gemisch aus einem geeigneten organischen Solvens und Wasser desorbiert und anschließend isoliert.

Es hat sich gezeigt, daß die Adsorptionsfähigkeit der Zeolithe für Furaneol weitgehend pH-unabhängig ist.

Adsorption und Desorption erfolgen im allgemeinen im Temperaturbereich von 0 bis 100°C, insbesondere 10 bis 60°C.

Das adsorbierte Furaneol wird bevorzugt unter Verwendung von Alkohol/Wasser-Gemischen in einem oder mehreren Schritten desorbiert.

Man arbeitet insbesondere mit Gemischen, die 0 bis 100 Mol-% Alkohol bezogen auf die Gemische, insbesondere 20 bis 60 Mol-% Alkohol, insbesondere Ethanol enthalten.

Geeignet sind auch Methanol, Propylalkohol, Isoprpylalkohol, Butanol und Isobutanol (einzeln oder gemeinsam) in diesen Mischungsverhältnissen.

Mit dem erfindungsgemäßen Verfahren können Reaktionsgemische aufgearbeitet werden, die aus den verschiedenen zum Stand der Technik beschriebenen Verfahren stammen.

Zeolithe sind kristalline, wasserhaltige Alumosilikate. Ihre dreidimensionale Gerüststruktur ist von einem ausgeprägten, regelmäßigen Hohlraumsystem mit Poren in Größenbereich molekularer Abmessungen (Ø 0,3 - 1,3 nm) durchzogen. Zeolithe sind dadurch in der Lage, Substanzgemische aufgrund ihrer Molekülgröße zu trennen und werden auch als Molekularsiebe bezeichnet. Neben Porengröße, Porenstruktur und Porenvolumen werden Zeolithe auch durch das Verhältnis von SiO₂ zu Al₂O₃ im Kristallgitter charakterisiert (Modul). Durch spezielle Verfahren bei der Herstellung der Zeolithe kann nach bekannten Verfahren der Aluminium-Gehalt reduziert werden (dealuminierte Zeolithe).

Für die Adsorption der erfindungsgemäß abzutrennenden Verbindungen sind besonders saure Zeolithe der Typen DAY, Mordenit oder Beta und insbesondere ZSM5 und dealuminisierter ZSM5, mit Moduli von 14 bis > 1000, insbesondere von 100 bis 1000, geeignet.

Die eingesetzten Konzentrationen des Adsorbens in der Lösung belaufen sich im allgemeinen auf 0,1 bis 800 g/l, insbesondere liegen sie zwischen 1 bis 200 g/l.

Die einzusetzende Konzentration ist primär von der Kapazität des Adsorbens für das Adsorptiv sowie von der vorliegenden Konzentration des Adsorptivs in der Lösung abhängig.

Zur Adsorption geeignet sind entweder feinkörnige Zeolithpulver der oben genannten Typen mit einem Partikeldurchmesser von 0,1 bis 10,0 µm, vorzugsweise von 1 bis 10 µm oder entsprechende Zeolith-Formkörper mit Korngrößen von 0,1 bis 10,0 mm, bevorzugt zwischen 1 und 2 mm.

Je höher der Modul des verwendeten Zeoliths ist, desto geringere Einflüsse von in komplexen Lösungen vorhandenen weiteren Verbindungen auf die Adsorption des Furaneols zeigen sich.

Um die Ausbeute der Desorption zu steigern, führt man eine fraktionierte Desorption durch. Nach erfolgter Adsorption wird der gewaschene und abgetrennte Zeolith mit dem Desorptionsmittel mehrere Stunden inkubiert.

Die flüssige Phase wird anschließend abgetrennt und der Zeolith einem oder mehreren weiteren Adsorptions- und Desorptionsschritten dieser Art unterworfen.

Für die verfahrenstechnische Realisierung stehen das Batch-, Festbett oder Crossflow-Filtrationsverfahren, kontinuierlich oder diskontinuierlich durchgeführt, zur Verfügung.

In einer vorteilhaften Ausführungsform kombiniert man die erfindungsgemäße Adsorption mit einer Crossflow-Filtration, bei der man
a) die beladenen Zeolithe in Form von Suspensionen an einer porösen Fläche/Membran vorbeiströmen läßt, und gleichzeitig
b) eine Druckdifferenz zwischen der Überström- und der gegenüberliegenden Seite der Fläche/Membran einstellt, so daß
c) ein Teil der die Fläche/Membran überströmenden von den adsorbierten Verbindungen ganz oder teilweise befreiten Lösung die Fläche/Membran quer zur Fließrichtung durchströmt (Filtratfluß)
d) in einem Waschschritt die von den adsorbierten Verbindungen zumindest teilweise befreite Suspension abtrennt,
e) anschließend die adsorbierten Verbindungen aus dem beladenen Zeolith desorbiert und
f) gegebenfalls die die nicht adsorbierten, aber auch noch gewünschte Verbindungen enthaltenden Lösungen aufarbeitet.

Diese Aufarbeitung umfaßt die Isolierung von in dem (den) ersten Adsorptionsschritt(en) nicht erfaßten gewünschten Verbindungen.

### Beispiel 1

### Adsorptionsversuche mit Zeolithpulver

Die Adsorptions- und Desorptionsversuche werden bei Raumtemperatur (25°C) durchgeführt.

Für die Adsorptionsversuche wurden Zeolithpulver der Typen ZSM5 und DAY entsprechend der in Tabelle 1 angegebenen Massen in Schott-Erlenmeyerkolben eingewogen und mit 20 g Adsorptionslösung versetzt (c_{Furaneol}=4,79 g/L).

Die Suspension wird 5 Minuten auf dem Schüttler bei 150 U/min geschüttelt, dann wird der pH-Wert gemessen. Der Anfangs-pH-Wert wird notiert.

Nach 12 Stunden Schüttelzeit wird der pH-Wert erneut gemessen, der Feststoff abzentrifugiert und die erhaltene Lösung über Membranfilter (Porenweite 0,2 µm) filtriert.

Die Konzentration des Furaneols wird in der Ausgangslösung sowie in den Adsorptionslösungen über HPLC analytisch bestimmt (Tabelle 2). Durch Differenzbestimmung wird die Beladungsmenge, dargestellt in der Tabelle 1, berechnet.

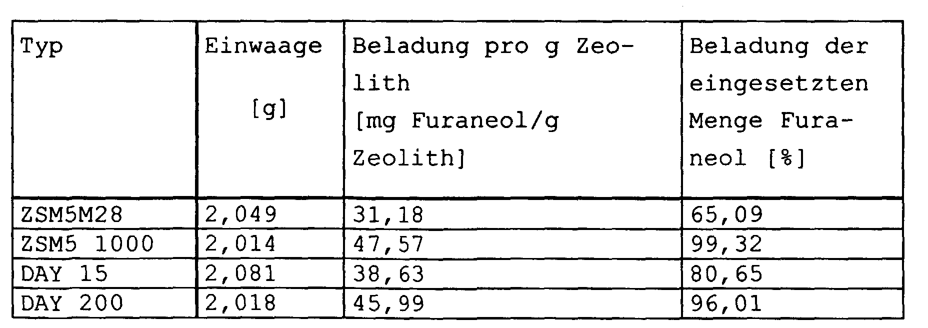

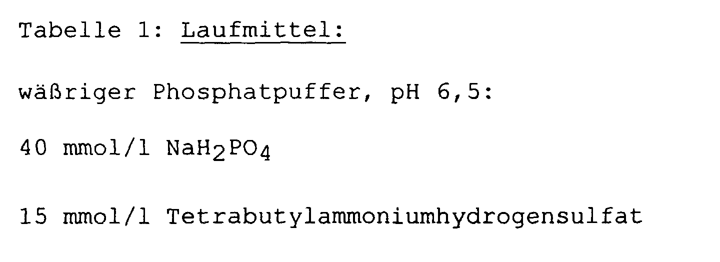

### Beispiel 2

### Desorptionsversuche mit Zeolithpulver

Die Desorption erfolgt durch Zugabe von jeweils 10 ml einer wäßrigen Lösung mit 50mol%igem Ethanol zu den abzentrifugierten Zeolithpulver. Es wird bis zur Gleichgewichtseinstellung geschüttelt (8h) und dann der Feststoff abzentrifugiert. Die erhaltene Lösung wird über Membranfilter (Porenweite 0,2 µm) filtriert.

Die Konzentration an Furaneol in der ethanolischen Lösung wird entsprechend Tabelle 3 mit Methanol als Eluent bestimmt.

Die Tabelle 4 enthält die Ergebnisse auch der fraktionierten Desorption.

Die prozentuale Rückgewinnung sinkt mit jedem weiteren Desorptionsschritt, die Gesamtausbeute steigt aber an.

**Tabelle 3**

| | Rückgewinnung (je Schritt: EtOH (50Mol%ig),10 mL) | | | | | | |
|---|---|---|---|---|---|---|---|
| Typ | C_{Rück,1} [g/L] | C_{Rück,1} [%] | C_{Rück,2} [g/L] | C_{Rück,2} [%] | C_{Rück,3} [g/L] | C_{Rück,3} [%] | C_{Rück,gesamt} [%] |
| ZSM5M28 | 1,32 | 20,7 | 0,49 | 7,8 | 0,21 | 3,2 | 31,7 |
| ZSM5 1000 | 5,64 | 58,9 | 2,19 | 22,9 | 0,73 | 7,6 | 89,4 |
| DAY 15 | 1,69 | 21,0 | 1,25 | 15,5 | 0,54 | 6,7 | 43,2 |
| DAY 200 | 5,87 | 63,3 | 2,57 | 27,7 | 0,87 | 9,5 | 100,5 * |

**Table 2**

| Geräteeinstellungen: | |
|---|---|
| RP-Säule 250/4 Nucleosil 100-5 C₁₈ | Machery-Nagel |
| Injektionsvolumen | 20 µl |
| UV-VIS Detektor, Detektionswellenlänge | 270 nm |
| Flußrate | 1 ml/min |
| Auswertemodus | Peakhöhe, Standardzusatzverfahren |

Die Desorption kann bei den Zeolithen DAY200, ZSM5 mit einem Modul>150 nach drei Desorptionsschritten quantitativ erreicht werden. Es zeigt sich eine Abhängigkeit der Desorptionsrate vom Modul beim Typ ZSM5. Die Rate steigt von 35% bei einem Modul=28 auf 100% bei einem Modul=1000.

Die Rückgewinnung von Furaneol® von Zeolithen mit niedrigem Modul gelingt nur zu 35 %, bei dem Zeolith ZSM5, und zu ca. 40% beim Typ DAY15.

## Patentansprüche

1. Verfahren zur adsorptiven Abtrennung von Furaneol aus wäßrigen und/oder organische Lösungsmittel enthaltenden Lösungen, das
**dadurch gekennzeichnet**
ist, daß man Furaneol enthaltende Lösung mit einem sauren Zeolith, der bevorzugt ein Modul von 14 bis > 1000 aufweist, in Kontakt bringt, nach erfolgter Adsorption den Zeolith abtrennt, anschließend insbesondere mit Wasser, wäscht, das Furaneol mit einem Gemisch aus einem geeigneten organischen Solvens und Wasser desorbiert und anschließend isoliert.

2. Verfahren gemäß Anspruch 1,
**dadurch gekennzeichnet,**
daß man zur Desorption als Solvens einen aliphatischen Alkohol mit 1 bis 4-Atomen einsetzt.

3. Verfahren gemäß Anspruch 1,
**dadurch gekennzeichnet,**
daß man ein Gemisch aus Wasser und 10 bis 60 Mol.-% des Solvens, bezogen auf die Gesamtmenge des Gemischs, zur Desorption einsetzt.

4. Verfahren gemäß den Ansprüchen 1 bis 3,
**dadurch gekennzeichnet,**
daß man Ethanol als Solvens einsetzt.

5. Verfahren gemäß Anspruch 1,
**dadurch gekennzeichnet,**
daß man eine aus der chemischen Synthese oder natürlichen Ausgangsmaterialien gewonnene Furaneol-Lösung einsetzt.

6. Verfahren gemäß einem oder mehreren der Ansprüche 1 bis 5,
**dadurch gekennzeichnet,**
daß man als Adsorbentien Zeolithe der Typen Day, ZSM-5, oder dealuminierter ZSM-5 mit den Moduli von 14 bis 1000, insbesondere 100 bis 1000, einsetzt.

7. Verfahren gemäß Anspruch 10,
**dadurch gekennzeichnet,**
daß man Zeolithe vom Typ ZSM5 oder dealuminierten ZSM-5 in der H-, Ammonium- oder Na-Form einsetzt.

8. Verfahren gemäß einem oder mehreren der Ansprüche 1 bis 7,
**dadurch gekennzeichnet,**
daß man es mit einer Crossflow-Filtration kombiniert, wobei man
a) die beladenen Zeolithe in Form von Suspensionen an einer porösen Fläche/Membran vorbeiströmen läßt, und gleichzeitig
b) eine Druckdifferenz zwischen der Überström- und der gegenüberliegenden Seite der Fläche/Membran einstellt, so daß
c) ein Teil der die Fläche/Membran überströmenden von den adsorbierten Verbindungen ganz oder teilweise befreiten Lösung die Fläche/Membran quer zur Fließrichtung durchströmt (Filtratfluß)
d) in einem Waschschritt die von den adsorbierten Verbindungen zumindest teilweise befreite Suspension abtrennt,
e) anschließend die adsorbierten Verbindungen aus dem beladenen Zeolith desorbiert.

9. Verfahren gemäß einem oder mehreren der vorhergehenden Ansprüche,
**dadurch gekennzeichnet,**
daß man Zeolithe mit einem mittleren Partikeldurchmesser von 0,1 bis 10 µm oder Formkörper mit einem Durchmesser von 0,1 bis 10,0 mm einsetzt.

10. Verfahren gemäß Anspruch 8,
**dadurch gekennzeichnet,**
daß man einen Transmembrandruck von 0,1 bis 3 bar einstellt.

11. Verfahren gemäß den Ansprüchen 8 bis 10,
**dadurch gekennzeichnet,**
daß man keramische oder organische Membranen/poröse Flächen mit Ultrafiltrations- oder Mikro- oder Nanofiltrationseigenschaften verwendet.

12. Verfahren gemäß einem oder mehreren der vorhergehenden Ansprüche,
**dadurch gekennzeichnet,**
daß man die nach der ersten Desorption gewonnene Lösung einem oder mehreren weiteren Adsorptions- und Desorptionsschritt(en) unterwirft.
